# EUROPÄISCHE PATENTANMELDUNG

(11) **EP 0 522 342 A1**
(43) Veröffentlichungstag der Anmeldung: **13.01.1993**
(21) Anmeldenummer: 92110506.0
(22) Anmeldetag: 22.06.1992
(51) Int. Cl.: G01N 27/406

(54) **Vorrichtung zum Bestimmen des Luft-Kraftstoff-Verhältnisses des einem Verbrennungsmotor zugeführten Gasgemisches**

(30) Priorität: 03.07.1991 DE 9108199 U
(71) Anmelder: SIEMENS AKTIENGESELLSCHAFT, D-80333 München (DE)
(72) Erfinder: Aidam, Eckhard, W-6729 Jockgrim (DE); Kimmig, Ludwig, W-7505 Ettlingen (DE)

(57) **Zusammenfassung**

Zur Bestimmung des Luft-Kraftstoff-Verhältnisses des einem Verbrennungsmotor zugeführten Gasgemisches aus der Abgaszusammensetzung wird eine Sauerstoffsonde (3) verwendet, an der katalytisch Abgaskomponenten mit dem im Abgas enthaltenen Sauerstoff reagieren. Zur Vermeidung von Meßfehlern ist diese Sonde (3) vor einer Einrichtung (4) zum Messen der übrigen Abgaskomponenten im Abgasstrom angeordnet, und es wird das Abgas so über die Sonde (3) und einen gegebenenfalls vorgeschalteten Katalysator (2) geführt, daß das Abgas vollständig nachverbrannt wird.

Hauptanwendungsgebiet der Erfindung sind Abgasprüfeinrichtungen für Kraftfahrzeuge mit geregeltem Katalysator.

## Beschreibung

Die Erfindung betrifft eine Vorrichtung zum Bestimmen des Luft-Kraftstoff-Verhältnisses (Lambda-Wert) des einem Verbrennungsmotor zugeführten Gasgemisches aus der Abgaszusammensetzung gemäß dem Oberbegriff des Anspruchs 1.

Derartige Vorrichtungen dienen vor allem zu Abgasuntersuchungen an Kraftfahrzeugen mit schadstoffarmen Fremdzündungsmotoren, insbesondere Motoren mit sogenanntem geregeltem Katalysator. Der Lambda-Wert kann aus den Abgaskomponenten Kohlenmonoxyd, Kohlendioxyd, den Kohlenwasserstoffen und Sauerstoff errechnet werden, z. B. mittels einer Formel, die in der Zeitschrift "Bosch Technische Berichte" 6 (1979) 4, Seiten 177 bis 186 angegeben ist. Vereinfachungen der dort auf Seite 181 angegebenen Formel (37) sind möglich. Im allgemeinen soll gleichzeitig mit dem Lambda-Wert der Kohlenmonoxyd-Anteil bestimmt werden. Während die Anteile an Kohlendioxyd, Kohlenmonoxyd und Kohlenwasserstoffen mit einem betriebssicheren InfrarotMeßsystem gemessen werden können, ist Sauerstoff nicht infrarot-aktiv und muß daher gesondert gemessen werden. Die sonst für die Betriebsanalyse üblichen Geräte der Sauerstoffmessung, bei denen der Paramagnetismus des Sauerstoffs ausgenutzt wird, können in Kraftfahrzeug-Abgastestern wegen deren aufwendigen Aufbaus nicht eingesetzt werden. Problematisch ist auch die Sauerstoffmessung mit Meßzellen, bei denen durch chemische Reaktion des Sauerstoffs mit dem Elektrodenwerkstoff dieser verbraucht wird, da dadurch die Lebensdauer der Meßzelle begrenzt und die Betriebssicherheit des gesamten Abgasmeßgerätes beeinträchtigt wird. Außerdem werden solche Meßzellen durch längere Beströmung mit Abgas wegen des darin enthaltenen Kohlendioxyds vergiftet. Solche Meßzellen sind z. B. aus der US-PS 3 767 552 bekannt.

Eine andere Art von Sauerstoffsonden, die als sogenannte Lambda-Sonden in Kraftfahrzeugen mit geregeltem Katalysator eingesetzt werden und von denen eine Ausführung in der britischen Patentanmeldung 2 057 140 beschrieben ist, beruht auf der Sauerstoffionen-Leitung einer z. B. auf ca. 800 °C erhitzten Zirkondioxyd-Keramik. Solche Sauerstoffsonden sind zwar robust und haben eine lange Lebensdauer, sie haben aber den Nachteil, daß durch katalytische Nachverbrennung an der aus Platin hergestellten Elektrodenbeschichtung der Zirkondioxyd-Keramik Sauerstoff entfernt wird. Der durch diese Nachverbrennungen verbrauchte Sauerstoff wird dann nicht mehr gemessen, so daß die Bestimmung des Lambda-Wertes mit einem Fehler behaftet ist.

Der vorliegenden Erfindung liegt die Aufgabe zugrunde, eine Vorrichtung der im Oberbegriff des Anspruchs 1 angegebenen Art so auszugestalten, daß Sauerstoffsonden eingesetzt werden können, an denen Abgaskomponenten mit dem freien Sauerstoff katalytisch verbrennen.

Erfindungsgemäß wird diese Aufgabe mit den im kennzeichnenden Teil des Anspruchs 1 angegebenen Maßnahmen gelöst.

Der Erfindung liegt die Erkenntnis zugrunde, daß eine Nachverbrennung im Abgas den aus den Abgaskomponenten ermittelten Lambda-Wert nicht beeinflußt. Als Sauerstoffsonde wird bevorzugt eine Sonde mit Zirkondioxyd-Keramik als Sauerstoffionen- Leiter eingesetzt. Reicht deren katalytische Wirkung aus, um eine vollständige Nachverbrennung im Abgas zu erreichen, sind keine weiteren Maßnahmen erforderlich. Es kann aber auch der Sauerstoffsonde ein Katalysator vorgeschaltet sein, in dem im Abgas eine teilweise Verbrennung zumindest insoweit stattfindet, daß die Verbrennung an der nachgeordneten Sauerstoffsonde dann vollständig ist.

Anhand der Zeichnung werden im folgenden die Erfindung sowie Ausgestaltungen und Ergänzungen näher beschrieben und erläutert.

Es zeigen
- Figur 1: den prinzipiellen Aufbau eines Ausführungsbeispiels der Erfindung und
- Figur 2: eine Sauerstoff-Meßzelle mit integriertem Katalysator.

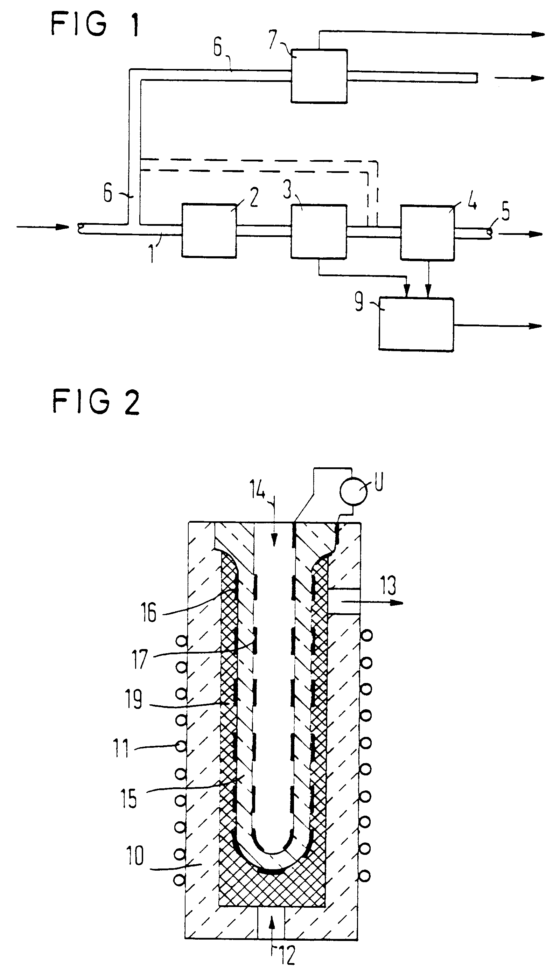

Mit 1 ist eine Meßgaszuleitung bezeichnet, in die Abgas aus der Abgasleitung eines Verbrennungsmotors mit einem sogenannten geregelten Katalysator abgezweigt ist. Es soll festgestellt werden, mit welchem Luft-Kraftstoff-Verhältnis der Motor betrieben wird. Ferner soll der Anteil an Kohlenmonoxyd gemessen werden. Für die Feststellung des Luft-Kraftstoff-Verhältnisses, des sogenannten Lambda-Wertes, werden die Abgaskomponenten Kohlenmonoxyd, Kohlendioxyd, Kohlenwasserstoffe und Sauerstoff gemessen und aus den Meßwerten der Lambda-Wert errechnet. In dem in der Figur 1 veranschaulichten Ausführungsbeispiel wird ein Teil des durch die Leitung 1 strömenden Meßgases über einen Katalysator 2, der zunächst für die Funktionsbeschreibung außer acht gelassen wird, zu einer Sauerstoffmeßzelle 3 und einer Infrarot-Meßeinrichtung 4 geleitet, mit der den Anteilen an Kohlenmonoxyd, Kohlendioxyd, Kohlenwasserstoffen und gegebenenfalls Stickoxyden entsprechende elektrische Werte gebildet werden. Im Ausführungsbeispiel ist die Sauerstoffmeßzelle 3 der Einrichtung 4 vorgeschaltet. Selbstverständlich kann die Reihenfolge auch umgekehrt sein. Die für die Lambda-Wert-Berechnung erforderlichen Werte der Abgasanteile werden einer Recheneinheit 9 zugeführt, die nach einer gespeicherten Formel den Lambda-Werte berechnet. Eine solche Formel ist z. B. in der Zeitschrift "Bosch Technische Berichte" 6 (1979) 4, Seite 181 angegeben. Kritisch ist die Sauerstoffmessung, wenn hierzu eine Meßzelle verwendet wird, die als Katalysator für eine Nachverbrennung im Abgas wirkt. Eine solche Zelle verändert nämlich die Abgaszusammensetzung; es wird Sauerstoff verbraucht, der dann nicht mehr gemessen wird. Um dies zu vermeiden, ist der Sauerstoff- Meßzelle 3 der Katalysator 2 vorgeschaltet, der so dimensioniert ist, daß in ihm eine vollständige Nachverbrennung stattfindet. Eine weitere Nachverbrennung in der Sauerstoff- Meßzelle 3 ist dann nicht mehr möglich. In einer solchen Anordnung werden zwar nicht die ursprünglichen Anteile der Abgaskomponenten gemessen; für die Berechnung des Lambda- Wertes schadet dies aber nicht, da dieser Wert unabhängig von der Nachverbrennung ist.

Soll von einer oder mehreren Komponenten, z. B. von Kohlenmonoxyd, der ursprüngliche Anteil gemessen werden, kann hierzu, wie im Ausführungsbeispiel nach Figur 1, von der Leitung 1 über eine Leitung 6 ein Teil des Meßgases abgezweigt und einer Kohlenmonoxyd-Meßeinrichtung 7 zugeführt werden, die über eine Leitung 11 ein dem Kohlenmonoxyd-Gehalt im Abgas entsprechendes Signal abgibt. Die Funktion der Meßeinrichtung 7 kann die Meßeinrichtung 4 übernehmen, wenn sie wahlweise an die Sauerstoffsonde 3 oder, wie mit gestrichelten Linien angedeutet, an die Leitung 6 anschließbar ist. Sie mißt dann einmal den ursprünglichen Kohlenmonoxyd-Gehalt und das andere Mal zur Berechnung des Lambda-Wertes den veränderten Anteil.

Die in Figur 2 dargestellte Sauerstoff-Meßzelle enthält ein etwa zylinderförmiges Meßelement 15 aus Zirkondioxyd, auf dessen Innen- und Außenseite je eine netzförmige Platinelektrode 16, 17 aufgebracht ist. Der Innenraum des Meßelementes ist mit einem Referenzgas, im allgemeinen mit Luft, gefüllt. Das Meßelement sitzt in einem zylindrischen Gehäuse 10, vorzugsweise aus Keramik, das einen Einlaß 12 und einen Auslaß 13 für das Meßgas aufweist. Eine Heizwicklung 11 heizt das Gehäuse und damit das Meßelement auf eine Temperatur von einigen 100°, z. B. auf 800 °C auf. Bei dieser Temperatur fließt zwischen den Elektroden 16, 17 durch das Meßelement 15 ein Sauerstoffionenstrom, dessen Größe und Richtung vom Verhältnis der Sauerstoffkonzentrationen im Innern und außerhalb des Meßelementes 15 abhängig ist. An den Elektroden 16, 17 entsteht eine diesem Verhältnis entsprechende Spannung. Der Raum zwischen dem Gehäuse 10 ist mit einem Platindrahtgeflecht 19, das als Katalysator wirkt, gefüllt.

Für die folgende Funktionsbeschreibung der Meßzelle wird zunächst das Platindrahtgeflecht 19 außer acht gelassen. Das einströmende Meßgas enthalte außer Sauerstoff auch Komponenten, die mit Sauerstoff in Anwesenheit von Platin als Katalysator verbrennen. Dadurch wird genau an der Stelle Sauerstoff verbraucht, wo der Sauerstoffanteil gemessen wird, d. h., der gemessene Sauerstoffanteil ist niedriger als der tatsächliche. Das Einfüllen des Platindrahtgeflechts 19 in die Meßzelle bewirkt bei geeigneter Strömung des Meßgases, daß dieses vollständig katalytisch nachverbrannt ist, bevor es an das Meßelement 15 mit der Platinelektrode 16 gelangt. Eine weitere Nachverbrennung ist daher nicht mehr möglich. Des weiteren bewirkt das Platindrahtgeflecht 19 die vollständige Nachverbrennung des gesamten Meßgases, so daß das durch den Auslaß 13 austretende Gas dieselbe Zusammensetzung hat wie das an der Außenseite des Meßelementes 15 sich befindenden Gases. Mit dem so gemessenen Anteil des restlichen Sauerstoffs und den anschließend gemessenen Anteilen der weiteren Komponenten wird der korrekte Lambda-Wert berechnet. Wird eine solche Sauestoff-Meßzelle in einer Meßvorrichtung entsprechend der nach Figur 1 eingesetzt, kann auf den dort mit 2 bezeichneten Katalysator verzichtet werden. Ist allerdings eine vollständige Nachverbrennung in der Sauerstoff-Meßzelle nicht sichergestellt, muß ein zusätzlicher Katalysator vorgeschaltet werden.

## Patentansprüche

1. Vorrichtung zum Bestimmen des Luft-Kraftstoff-Verhältnisses (Lambda-Wert) des einem Verbrennungsmotor zugeführten Gasgemisches aus der Abgaszusammensetzung mit einer Sauerstoff- Meßzelle und einem mit der Sauerstoff-Meßzelle hinsichtlich des Meßgasstromes in Reihe geschalteten Einrichtung zum Messen von weiteren Abgaskomponenten sowie einer Einrichtung zum Errechnen des Lambda-Wertes aus den Anteilen an Sauerstoff und an den weiteren Abgaskomponenten, **dadurch gekennzeichnet**, daß ein Katalysator (2, 19) vorgesehen ist, an den die Abgaskomponenten mit dem im Abgas enthaltenen Sauerstoff vor der Messung des Sauerstoff-Anteils und der Anteile der weiteren Abgaskomponenten vollständig verbrennen.

2. Vorrichtung nach Anspruch 1, **dadurch gekennzeichnet**, daß der Katalysator (2) im Abgasstrom vor der Sauerstoff-Meßzelle (3) und der Einrichtung (4) zum Messen von weiteren Abgaskomponenten angeordnet ist.

3. Vorrichtung nach Anspruch 1 oder 2, **dadurch gekennzeichnet**, daß der Katalysator (19) in der Sauerstoff-Meßzelle enthalten ist und die Sauerstoff-Meßzelle im Abgasstrom vor der Einrichtung zum Messen der weiteren Abgaskomponenten liegt.

4. Vorrichtung nach Anspruch 3, **dadurch gekennzeichnet**, daß die Sauerstoff-Meßzelle ein zylinderförmiges, mit einem Referenzgas gefülltes Meßelement (15) enthält, das in einem konzentrischen, zylinderförmigen Gehäuse (10) mit einem Einlaß (12) und einem Auslaß (13) für das Abgas angeordnet ist, und daß der Katalysator (19) im Zwischenraum zwischen dem Meßelement (15) und dem Gehäuse (10) angeordnet ist.

5. Vorrichtung nach Anspruch 4, **dadurch gekennzeichnet**, daß das Sauerstoff-Element (15) aus Zirkondioxyd besteht und auf seiner Innen- und Außenwandung je eine Platinelektrode (16, 17) aufgebracht ist.

6. Vorrichtung nach Anspruch 4 oder 5, **dadurch gekennzeichnet**, daß der Katalysator (19) aus einem Platindrahtgeflecht besteht.

7. Vorrichtung nach einem der Ansprüche 4 bis 6, **dadurch gekennzeichnet,** daß am Gehäuse (10), vorzugsweise an seiner Außenseite, eine Heizwicklung (11) angebracht ist.

8. Vorrichtung nach einem der Ansprüche 4 bis 6, **dadurch gekennzeichnet**, daß das Gehäuse (10) aus Keramik besteht.

9. Vorrichtung nach einem der Ansprüche 1 bis 8, **dadurch gekennzeichnet**, daß zur gleichzeitigen Messung des Kohlenmonoxyd-Gehaltes und des Lambda- Wertes vor der Sauerstoff-Meßzelle (3) bzw. vor dem Katalysator (2) eine Einrichtung zur Kohlenmonoxyd-Messung angeschlossen ist.

10. Vorrichtung nach Anspruch 9, **dadurch gekennzeichnet**, daß das Meßgas zur Messung des Kohlenmonoxyd-Anteils unmittelbar der Einrichtung (4) zur Messung der weiteren Abgaskomponenten zuführbar ist.
